(19) Europäisches Patentamt
European Patent Office
Office européen des brevets

(11) Publication number: **0 086 914**
**B1**

(12) **EUROPEAN PATENT SPECIFICATION**

(45) Date of publication of patent specification: **23.10.85**

(51) Int. Cl.⁴: **C 01 B 11/06**

(21) Application number: **82305994.4**

(22) Date of filing: **11.11.82**

(54) **An improved process for calcium hypochlorite production.**

(30) Priority: **04.02.82 US 345869**
**26.02.82 US 352747**

(43) Date of publication of application:
**31.08.83 Bulletin 83/35**

(45) Publication of the grant of the patent:
**23.10.85 Bulletin 85/43**

(84) Designated Contracting States:
**BE DE FR GB IT NL**

(56) References cited:
**EP-A-0 060 126**
**US-A-1 713 669**
**US-A-1 718 285**
**US-A-3 094 380**
**US-A-3 572 989**
**US-A-3 895 099**
**US-A-3 954 948**
**US-A-4 196 184**
**US-A-4 258 024**

(73) Proprietor: **OLIN CORPORATION**
**275 South Winchester Avenue**
**New Haven, Connecticut 06511 (US)**

(72) Inventor: **Sakowski, Walter John**
**1505 17th Street, N.W.**
**Cleveland Tennessee 37311 (US)**
Inventor: **Duncan, Budd Lee**
**1207 Towanda Trail**
**Athens Tennessee 37303 (US)**

(74) Representative: **Thomas, Roger Tamlyn et al**
**D. Young & Co. 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 086 914 B1

**Description**

This invention relates to the manufacture of calcium hypochlorite. More particularly, this invention relates to an improved continuous process for the manufacture of calcium hypochlorite. Calcium hypochlorite is a commercial bleaching and sanitizing agent used particularly in the disinfection of swimming pools.

Calcium hypochlorite is produced by the reaction of calcium compounds such as an aqueous slurry of lime with a chlorinating agent, for example, chlorine. The chlorination reaction is conducted until crystals of a hypochlorite product such as neutral calcium hypochlorite dihydrate are produced in a hypochlorite mother liquor. After separation of the crystalline hypochlorite product, it is necessary to treat the mother liquor to recover the calcium hypochlorite values or to decompose hypochlorite ions before disposal of the solution.

In general, the lime employed in commercial processes is of a high purity as impurities normally found in lime are deleterious to the calcium hypochlorite product when present in any significant amounts. There are, however, relatively few natural sources of lime which meet the specifications required by commercial calcium hypochlorite processes. Further, these high purity limes, where available, bring a premium price and thus increase the cost of producing calcium hypochlorite. In addition, there are produced in commercial processes solutions containing concentrations of calcium hypochlorite which are too dilute for recycle to the process and too concentrated for disposal by environmentally safe procedures.

The treatment of calcium hypochlorite containing mother liquors with lime to precipitate dibasic calcium hypochlorite crystals is known as described, for example, in U.S. Patent Nos. 1,713,669; 1,718,285; and 3,094,380.

U.S. Patent No. 1,713,669, issued to R. B. MacMullin et al, describes a process in which a lime slurry is chlorinated to precipitate calcium hypochlorite which is separated from a filtrate containing hypochlorite values. The filtrate is treated with lime to precipitate basic calcium hypochlorite which is recycled to make up additional lime slurry.

U.S. Patent No. 1,718,285, issued to A. George, teaches a process for reacting a sodium hypochlorite solution and lime to produce neutral calcium hypochlorite crystals in a mother liquor. Following the separation of the crystalline product, the mother liquor may be treated with lime to form a basic hypochlorite which can be used to replace an equivalent amount of lime in the next cycle of the process.

Similarly, U.S. Patent No. 3,094,380, issued to E. A. Bruce, describes the reaction of calcium hypochlorite mother liquor with lime to crystallize dibasic calcium hypochlorite. A cake of dibasic calcium hypochlorite was recovered and chlorinated to produce neutral calcium hypochlorite.

The processes of U.S. Patent Nos. 1,713,669; 1,718,285; and 3,094,380, however, have insufficient process controls necessary to produce slurries of dibasic calcium hypochlorite crystals whose filtration rates are suitable for use in a continuous commercial calcium hypochlorite process. In addition, the filtrates remaining after recovery of the dibasic crystals have undesirably high concentrations of calcium and hypochlorite ions. Moreover, the processes of these patents cannot use low grade lime sources as the calcium hypochlorite products produced contain any insoluble impurities orginally present in the lime.

The removal of iron from slurries of basic calcium hypochlorite crystals is described in U.S. Patent No. 3,760,064, issued September 18, 1973, to T. C. Droste, in a process which adds a salt of a slurry metal of Group IIA, IIB, or silver to the slurry to form an insoluble iron compound. The insoluble iron compound is removed from the basic calcium hypochlorite crystals by employing a settling apparatus which provides a differential rate of settling. However, by converting a soluble iron impurity in the slurry to an insoluble impurity, this process introduces additional solids to be separated from the calcium hypochlorite crystals. In addition, inclusion of the metals employed into the finished calcium hypochlorite product is undesirable.

In U.S. Patent No. 3,895,099, issued July 15, 1975, to W. J. Sakowski, a process is described in which lower grade lime sources may be employed which are initially reacted with chlorine to form a slurry of the insoluble impurities in a solution of calcium hypochlorite and calcium chloride. The insoluble impurities are removed from the solution, for example, by filtering and the purified filtrate is then employed in producing calcium hypochlorite. U.S. Patent No. 3,895,099 also teaches the treatment of dilute calcium hypochlorite solutions with an alkali metal hydroxide to recover a highly pure lime.

U.S. Patent No. 4,196,184, issued April 1, 1980, to W. J. Sakowski, describes a process in which a $Ca(OCl)_2$-containing mother liquor is reacted with an alkali metal hydroxide at a pH in the range of 12.1 to 12.6 to form a mixture of crystalline hemi-basic calcium hypochlorite and lime.

While the processes of U.S. Patent No. 3,895,099 and U.S. Patent No. 4,196,184 recover calcium values from calcium hypochlorite-containing liquors; both processes require evaporation of the filtrate remaining after separation of the lime.

Japanese Laid-open Patent Specification No. 121,901—1980 publicly disclosed on September 19, 1980, by T. Murakami et al describe a method of removing insoluble impurities from slurries of calcium hypochlorite dihydrate in a classifier tank. As there is a considerable overlap between the particle size of the insoluble impurities and the calcium hypochlorite dihydrate crystals, efficient separation of the insoluble impurities by particle size classification methods is difficult to achieve.

There is presently a need to improve the recovery of calcium values in calcium hypochlorite processes. Thus there is also a need for a process for producing calcium hypochlorite in which insoluble

impurities are readily removed and in which calcium values are economically recovered from waste streams.

It is an aim of at least the preferred forms of one aspect of the present invention:

(a) to provide an improved process for separating dibasic calcium hypochlorite from calcium hypochlorite-containing solutions;

(b) to provide an improved process for producing calcium hypochlorite wherein the calcium and hypochlorite values in waste streams are substantially reduced;

(c) to provide a process for recovering calcium and hypochlorite from effluents containing calcium hypochlorite having reduced energy requirements.

It is a further aim of at least the preferred embodiments of another aspect of the invention:

(a) to provide a continuous process for producing calcium hypochlorite in which low grade lime sources can be employed;

(b) to provide a process for efficiently and readily removing insoluble impurities from slurries of calcium hypochlorite crystals;

(c) to provide a process for recovering calcium and hypochlorite values having reduced raw material costs.

Thus, in one aspect the present invention provides a process for producing neutral calcium hypochlorite which comprises:

a) admixing lime, an alkali metal hypochlorite and dibasic calcium hypochlorite crystals in a mixing zone to form a mixing zone slurry;

b) reacting the mixing zone slurry with chlorine to form a paste of neutral calcium hypochlorite;

c) separating the paste into a cake of neutral calcium hypochlorite and a paste liquor;

d) reacting the paste liquor with a slurry of lime in a crystallizer to form a slurry of dibasic calcium hypochlorite crystals in a mother liquor;

e) separating the crystals of dibasic calcium hypochlorite crystals from a dibasic mother liquor; and

f) recycling the dibasic calcium hypochlorite crystals to the mixing zone.

In another aspect, the invention provides a process as described above in which step a) is replaced by the following steps:

i) reacting an aqueous slurry of lime containing insoluble impurities with chlorine to form a first slurry of dibasic calcium hypochlorite crystals and insoluble impurities in a calcium chloride mother liquor;

ii) separating the insoluble impurities from the first slurry of dibasic calcium hypochlorite crystals in calcium chloride mother liquor;

iii) separating the dibasic calcium hypochlorite crystals from the calcium chloride mother liquor; and

iv) admixing the dibasic calcium hypochlorite crystals, an alkali metal hypochlorite and recycle dibasic calcium hypochlorite crystals in a mixing zone to form the mixing zone slurry.

Preferred embodiments of the invention will now be described with reference to the drawings, in which:—

Figure 1 is a flow sheet of one embodiment of the present invention illustrating the separation and recovery of calcium hypochlorite and the recycle of dibasic calcium hypochlorite slurry.

Figure 2 is a flow sheet showing an additional embodiment of the invention including the embodiment of Figure 1 as well as steps including lime purification.

Figure 3 is a flow sheet showing an additional embodiment for lime purification.

Figure 4 is a flow sheet of a further embodiment of the present invention illustrating lime purification and the recycle of dibasic calcium hypochlorite slurry.

Figure 5 is a flow sheet showing the embodiment of Figure 4 as well as steps for recovering calcium values from a slurry of insoluble impurities.

Alkali metal hypochlorites and alkali metal hydroxides are employed as reactants in the present invention and one of the products is an alkali metal chloride. In order to simplify the disclosure, the invention will be described hereinafter in terms of "sodium hypochlorite", "sodium hydroxide" and "sodium chloride". However, those skilled in the art will recognize that any other suitable alkali metal hypochlorite such as potassium hypochlorite or any other suitable alkali metal hydroxide such as potassium hydroxide can serve as a substitute or partial replacement for the corresponding sodium compounds. In this event, one of the products will be potassium chloride. In order to simplify process conditons, it is preferred to employ either all sodium compounds or all potassium compounds. However, the process can also be operated with a mixture of these alkali metal compounds if the efficiency of separating products is not important to the operation.

More in detail, in the process of Figure 1, lime, sodium hypochlorite and recycle dibasic calcium hypochlorite slurry or cake are admixed in mixing zone 1 to form a mixing zone slurry. Mixing zone 1 is a mixing tank or other suitable vessel having agitation means for blending the various components fed thereto.

The resulting mixing zone slurry is conveyed to slurry chlorinator 2 and reacted with chlorine. Slurry chlorinator 2 is any suitable chlorination apparatus provided with agitation means for maximum contact between chlorine and slurry. It is preferred to employ as slurry chlorinator 2 an evaporator chlorinator which utilizes the chlorination technique described in U.S. Patent No. 3,241,912, issued to Bernard H.

Nicolaisen on March 22, 1966. Temperature within slurry chlorinator 2 is maintained within the range from about 0° to about 35° and preferably from about 20° to about 30°C.

During chlorination of the slurry in slurry chlorinator 2, lime reacts with chlorine to form calcium hypochlorite dihydrate and calcium chloride in accordance with Equation (1):

$$Ca(OH)_2+Cl_2 \rightarrow 1/2Ca(ClO)_2 \cdot 2H_2O+1/2CaCl_2 \quad (1)$$

The dibasic calcium hypochlorite present in the slurry chlorinator 2 reacts with chlorine to form neutral calcium hypochlorite in accordance with Equation (2):

$$Ca(OCl)_2 \cdot 2Ca(OH)_2+2Cl_2 \rightarrow 2Ca(OCl)_2+CaCl_2+2H_2O \quad (2)$$

Sodium hypochlorite present in slurry chlorinator 2 reacts with calcium chloride to form additional calcium hypochlorite and sodium chloride in accordance with Equation (3):

$$2NaOCl+CaCl_2 \rightarrow Ca(OCl)_2+2NaCl \quad (3)$$

The primary products of slurry chlorinator 2 are neutral calcium hypochlorite, sodium chloride and water. At start-up of the process it is preferred to fill slurry chlorinator 2 with a slurry or "paste" of calcium hypochlorite solids suspended in an aqueous solution of sodium chloride and calcium hypochlorite, with an excess lime or other alkali concentration in the slurry being less than about 1.0 and preferably less than about 0.50 percent by weight. The rate of feed of mixing zone slurry and chlorine to slurry chlorinator 2 and rate of evaporation of water, if any, are adjusted to maintain the concentration of unreacted lime or other alkali during the reaction below about 1.0 percent. Continuous chlorination of the slurry in this manner causes the formation of coarse calcium hypochlorite crystals which are much more easily separated from paste liquor in cake separator 3 than are calcium hypochlorite crystals separated in a conventional triple salt process or a batch type process.

A portion of the resulting paste produced in slurry chlorinator 2 comprised of solid neutral calcium hypochlorite dihydrate and a paste liquor, which is predominately an aqueous solution of sodium chloride and calcium hypochlorite, is continuously withdrawn from slurry chlorinator 2 and conveyed to cake separator 3.

Cake separator 3 is a filter, centrifuge, or other suitable solid-liquid separating apparatus capable of separating a moist cake of calcium hypochlorite dihydrate crystals from the aqueous solution of sodium chloride and calcium hypochlorite.

Moist cake from cake separator 3 generally contains from about 40 to about 60 percent by weight of calcium hypochlorite dihydrate, from about 2 to about 15 percent by weight of sodium chloride, and from about 40 to about 50 percent by weight of water. Moist cake is generally conveyed to dryer 4 where it is heated to remove most of the water. Dryer 4 is any suitable drying unit or units capable of reducing the moisture content of the calcium hypochlorite cake to the desired level without causing excess decomposition of the calcium hypochlorite particles.

Generally the water content of the calcium hypochlorite is reduced in dryer 4 to below about 10 percent by weight, for example, in the range from about 0.5 to about 10, preferably from about 0.5 to about 8, and more preferably from about 4.0 to about 8 percent by weight. The calcium hypochlorite content of the dried calcium hypochlorite generally ranges from about 65 to about 85, and preferably from about 65 to about 75 percent by weight. The remainder of the dried calcium hypochlorite is predominately sodium chloride. The dried product is then placed in suitable containers, with or without prior size classification or other processing such as pelletizing, prior to use in water treatment or other utility.

"Paste liquor" (or "paste filtrate" when cake separator 3 is a filter) is an aqueous sodium chloride solution from cake separator 3 which also contains soluble calcium hypochlorite. This paste liquor is conveyed to dibasic crystallizer 6, which is any suitable tank crystallizer provided with agitation means, where the lime slurry from mixing zone 5 reacts with calcium hypochlorite present in the paste liquor in accordance with Equation (4):

$$Ca(OCl)_2+2Ca(OH)_2 \rightarrow Ca(OCl)_2 \cdot 2Ca(OH)_2 \quad (4)$$

This reaction in dibasic crystallizer 6 forms a slurry of dibasic calcium hypochlorite crystals in a dibasic mother liquor, an aqueous solution of sodium chloride and calcium hypochlorite. The resulting slurry is conveyed to dibasic separator 7 which is a solid-liquid separating apparatus such as a filter, centrifuge or other suitable apparatus. In dibasic separator 7, at least a portion of the mother liquor is separated from the dibasic slurry to form a more concentrated slurry or a moist dibasic cake which is recycled to mixing zone 1.

Mother liquor, the aqueous solution of sodium chloride and dibasic calcium hypochlorite recovered in dibasic separator 7, may be utilized as bleach liquor. This mother liquor contains minor amounts of calcium hypochlorite values, for example, from about 3 to about 4 weight percent of $Ca(OCl)_2$. Mother liquor from dibasic separator 7 is preferably recycled to the process as described more fully below.

In the embodiment of Figure 2, a portion of the lime used is fed to lime chlorinator 8. Added as an

aqueous slurry, the lime is chlorinated to form an aqueous solution of calcium hypochlorite in accordance with the reaction of Equation (1). As previously shown above, impurities in the lime include insoluble impurities such as silica, aluminum salts, iron salts, magnesium salts, magnesia, unburned limestone (calcium carbonate and magnesium carbonate) and other compounds in trace quantities. These impurities present in the lime remain insoluble in the aqueous solution formed in lime chlorinator 8 and form a slurry with the aqueous solution of calcium hypochlorite and calcium chloride. This slurry is conveyed to impurity separator 9, which is a suitable solid-liquid separator such as a filter, centrifuge or the like, where solid impurities are separated. Solid impurities from impurity separator 9 are generally disposed of as solid waste, land fill or the like. The aqueous solution of calcium hypochlorite and calcium chloride from impurity separator 9 is conveyed to mixing zone 1. While the primary function of mixing zone 1 is to effect admixing of the components fed thereto, in the embodiment of Figure 2, the calcium chloride component of the aqueous solution from impurity separator 9 is reacted in mixing zone 1 with sodium hypochlorite to form an aqueous solution of calcium hypochlorite and sodium chloride in accordance with Equation (3).

A portion of recycle dibasic calcium hypochlorite, in an additional embodiment, may be fed to lime chlorinator 8 where it is admixed with lime to form a slurry containing from about 15 to about 20 percent by weight of active lime. This slurry is reacted with chlorine to form a solution of neutral calcium hypochlorite and $CaCl_2$ in accordance with the reaction of Equation (4). Impurities present in the recycle dibasic slurry from dibasic separator 7 remain insoluble and are removed by impurity separator 9 from the aqueous hypochlorite solution.

In a further embodiment, mother liquor recovered from dibasic separator 7 may be used in preparing the lime slurry to be fed to mixing zone 1, mixing zone 5 and/or lime chlorinator 8. Calcium hypochlorite in solution in the mother liquor may in this way be recovered.

In an additional embodiment, a portion of the dibasic calcium hypochlorite slurry from dibasic separator 7 may be used in preparing the lime slurry in mixing zone 5 fed to dibasic crystallizer 6.

In the embodiment illustrated in Figure 3, the dibasic slurry from the dibasic crystallizer 6 can be passed through elutriator 10 in which the insoluble lime impurities can be removed from a slurry of coarse dibasic crystals. This embodiment provides another means for utilizing less pure limes. The elutriant is a clean filtrate produced in impurity separator 11 which discharges the insoluble impurities to solid wastes or land fill. By varying the amount of dibasic mother liquor in the recycle dibasic slurry added to mixing zone 1, the volume of paste liquor fed to dibasic crystallizer 6 can be varied to permit a variance in the amount of raw lime fed into mixing zone 5. This permits the amount of lime purified to be varied while maintaining a fixed insoluble content in the final calcium hypochlorite product irrespective of the impurity content in the raw lime.

In the embodiment of Figure 4, an aqueous slurry of lime is fed to crystallizer 1′ and reacted with chlorine to form a slurry of dibasic calcium hypochlorite crystals and insoluble impurities in a calcium chloride mother liquor containing calcium hypochlorite. Crystallizer 1′ is any suitable tank crystallizer provided with agitation means. The slurry is removed from crystallizer 1′ and added to impurity separator 2′. Impurity separator 2′ is any suitable solid-liquid separator having means to classify the solids with respect to particle size. Examples of separators which may be employed include elutriators, sedimentation tanks, air flotation apparatus, hydrocyclones and hydraulic classifiers. Impurity separator 2′ separates coarse, clean crystals of dibasic calcium hypochlorite from the insoluble impurities present in the lime used, and fine crystals of dibasic calcium hypochlorite. The insoluble impurities and fines are removed from impurity separator 2′ for further treatment or disposal.

A slurry of coarse dibasic hypochlorite crystals in calcium chloride mother liquor is recovered from impurity separator 2′ and conveyed to crystal separator 3′, a solid-liquid separating apparatus such as a filter or centrifuge. In crystal separator 3′, the calcium chloride mother liquor is separated from a concentrated slurry or moist cake of dibasic calcium hypochlorite. The calcium chloride mother liquor may be concentrated to produce a hydrate such as the dihydrate, tetrahydrate or hexahydrate of calcium chloride which may be used commercially as heat transfer agents, for example, in solar energy technology.

Coarse dibasic calcium hypochlorite crystals from crystal separator 3′, as a moist cake or concentrated slurry in calcium chloride mother liquor are fed to mixing zone 4′. Also added to mixing zone 4′ are sodium hypochlorite solution and recycle dibasic calcium hypochlorite crystals. These reagents are admixed in mixing zone 4′ to form a mixing zone slurry. Mixing zone 4′ is a mixing tank or other suitable vessel having agitation means for blending the various components fed thereto.

The resulting mixing zone slurry is conveyed to slurry chlorinator 5′ and reacted with chlorine. Slurry chlorinator 5′ is any suitable chlorination apparatus provided with agitation means for maximum contact between chlorine and slurry. Although any chlorinator having cooling means for removing the heat of chlorination is suitable, it is preferred to employ as slurry chlorinator 5′ an evaporator-chlorinator which utilizes the chlorination technique described in the above mentioned U.S. Patent No. 3,241,912. Temperatures within slurry chlorinator 5′ are maintained within the range from about 0° to about 35°C. and preferably from about 20° to about 30°C.

During chlorination of the slurry in slurry chlorinator 5′, lime reacts with chlorine to form calcium hypochlorite and calcium chloride in accordance with Equation (1′):

$$Ca(OH)_2+Cl_2 \rightarrow \tfrac{1}{2}Ca(OCl)_2+\tfrac{1}{2}CaCl_2+H_2O. \qquad (1')$$

The dibasic calcium hypochlorite present in the slurry chlorinator 5' reacts with chlorine to form calcium hypochlorite and calcium chloride in accordance with the above equation (2).

Similarly, sodium hypochlorite present in slurry chlorinator 5' reacts with calcium chloride to form additional calcium hypochlorite and sodium chloride in accordance with the above equation (3).

The primary products of slurry chlorinator 5' are neutral calcium hypochlorite dihydrate crystals in a sodium chloride mother liquor. At start-up of the process, it is preferred to fill slurry chlorinator 5' with a slurry of calcium hypochlorite dihydrate solids suspended in an aqueous solution of sodium chloride and calcium hypochlorite. The feed rate of mixing zone slurry and chlorine to slurry chlorinator 5', the rate of evaporation of water, if any, and the withdrawal rate of the resulting calcium hypochlorite paste are adjusted to achieve substantially complete chlorination of the calcium values fed to slurry chlorinator 5' in the mixing zone slurry, while maintaining the total alkali concentration in slurry chlorinator 5' below about 1.0 percent and preferably below about 0.5 percent by weight of the slurry. Continuous chlorination of the slurry in this manner causes the formation of coarse calcium hypochlorite dihydrate crystals which are much more easily separated from paste liquor in cake separator 6' than are calcium hypochlorite dihydrate crystals separated in a conventional triple salt process or a batch type process.

A portion of the resulting paste produced in slurry chlorinator 5' comprised of solid neutral calcium hypochlorite dihydrate and a paste liquor, which is predominately an aqueous solution of sodium chloride and calcium hypochlorite, is continuously withdrawn from slurry chlorinator 5' and conveyed to cake separator 6'.

Cake separator 6' is a filter, centrifuge, or other suitable solid-liquid separating apparatus capable of separating a moist cake of calcium hypochlorite dihydrate crystals from the paste liquor.

Moist cake from cake separator 6' generally contains from about 40 to about 60 percent by weight of calcium hypochlorite, from about 2 to about 15 percent by weight of sodium chloride, and from about 30 to about 50 percent by weight of water. Moist cake is generally conveyed to dryer 7' where it is heated to remove most of the water. Dryer 7' is any suitable drying unit or units capable of reducing the moisture content of the calcium hypochlorite cake to the desired level without causing excess decomposition of the calcium hypochlorite particles.

Generally the water content of the calcium hypochlorite cake is reduced in dryer 7' to below about 10 percent by weight, for example, in the range from about 0.5 to about 10, preferably from about 0.5 to about 8, and more preferably from about 4.0 to about 8 percent by weight. The calcium hypochlorite content of the dried product generally ranges from about 65 to about 85, and preferably from about 65 to about 75 percent by weight. The remainder of the dried product is predominately sodium chloride. The dried calcium hypochlorite product is then placed in suitable containers, with or without prior size classification or other processing such as pelletizing, prior to use in water treatment or other utility.

"Paste liquor" (or "paste filtrate" when cake separator 6 is a filter) is an aqueous sodium chloride solution from cake separator 6' which also contains soluble calcium hypochlorite. This paste liquor is conveyed to dibasic crystallizer 8', which is any suitable tank crystallizer provided with agitation means, where the added lime reacts with calcium hypochlorite present in the paste liquor in accordance with the above equation (4). This reaction in dibasic crystallizer 8' forms a slurry of dibasic calcium hypochlorite crystals in a NaCl mother liquor, an aqueous solution of sodium chloride and calcium hypochlorite. The resulting slurry is conveyed to dibasic separator 9' which is a solid-liquid separating apparatus such as filter, centrifuge, or other suitable apparatus. In dibasic separator 9', at least a portion of the mother liquor is separated from the dibasic slurry to form a more concentrated slurry or a moist dibasic cake which is recycled to mixing zone 4'.

Sodium chloride mother liquor, the aqueous solution of sodium chloride and calcium hypochlorite recovered in dibasic separator 9', may be utilized as bleach liquor. This mother liquor contains minor amounts of calcium hypochlorite values, for example, from about 2 to about 6 weight percent of $Ca(OCl)_2$. A portion of the NaCl mother liquor from dibasic separator 9' is preferably recycled to the process as described more fully below.

In the embodiment of Figure 5, which is similar to Figure 4 except that fine crystals and lime impurities are conveyed from impurity separator 2' to fines chlorinator 10'. Chlorine is fed to fines chlorinator 10' to chlorinate dibasic calcium hypochlorite fines and residual lime present in the impurities-containing slurry to produce a slurry of insoluble impurities in a solution of calcium hypochlorite and calcium chloride. Fines chlorinator 10' is any reactor in which a chlorination reaction can be conducted.

From fines chlorinator 10', the slurry of insoluble impurities is conveyed to mud separator 11' which is any suitable solid-liquid separator such as a centrifuge or filter. The insoluble impurities are separated as a mud or slime and disposed of, for example, in land fill deposits. The solution containing calcium hypochlorite and calcium chloride values recovered in mud separator 11' is transported to crystal separator 3'. In an added embodiment, a portion of the solution from mud separator 11' may be used as the aqueous phase in preparing the lime slurry fed to crystallizer 1'.

The primary raw materials for the process of this invention are lime, sodium hypochlorite, chlorine and water.

Lime is added to the process at mixing zone 1, mixing zone 5, lime chlorinator 8, crystallizer 1' and/or dibasic crystallizer 8'. One of the advantages of this invention is that relatively impure lime may be utilized to prepare a relatively pure calcium hypochlorite product. For example, lime having an active lime content

as low as 85 percent by weight or less may be added to crystallizer 1′ or dibasic crystallizers 6 or 8′ in accordance with the process of this invention and produce a relatively pure calcium hypochlorite product. Generally the active lime content of the lime employed in the process of the present invention ranges from about 85 to about 100 percent, and preferably from about 90 to about 97 percent by weight of active lime. Lime impurities may range from about 0 to about 15 percent and generally from about 3 to about 10 percent by weight of the lime.

Typical illustrative specifications for a preferred lime feed and for an acceptable lime feed are as follows:

| Component | Preferred | Acceptable |
|---|---|---|
| $Ca(OH)_2$ min.% | 95.0 | 85 |
| $CaCO_3$ max. % | 1.0 | 3.0 |
| MgO max. % | 0.5 | 3.5 |
| $SiO_2$ max. % | 0.5 | 2.5 |
| $FeO_3+Al_2O_3$ max. % | 0.5 | 1.5 |
| $CaSO_4$ max. % | 0.5 | 1.5 |

The average particle size of lime feed to the process generally is substantially all −325 mesh (wet screen analysis), but particles up to about −200 mesh may be employed, if desired.

When the impurity content in the lime feed is greater than about 5 percent by weight, it may be desirable to add a lime purification step to remove impurities from at least a portion of the lime fed to mixing zone 1.

As previously shown above, impurities in the lime include insoluble impurities such as silica, aluminum salts, iron salts, magnesium salts, magnesia, unburned limestone (calcium carbonate and magnesium carbonate) and other compounds in trace quantities. These impurities present in the lime slurry fed to crystallizer 1′ remain insoluble and form a slurry with the dibasic calcium hypochlorite crystals in an aqueous solution of calcium hypochlorite and calcium chloride. This slurry is conveyed to impurity separator 2′, which is a suitable solid-liquid separator having means to classify the solids with respect to particle size. Solid impurities from impurity separator 2′ are generally disposed of as solid waste, land fill or the like.

Sodium hypochlorite, added to mixing zone 1 or 4′, may be prepared by chlorinating an aqueous solution of sodium hydroxide in a suitable agitated chlorinator reactor (not shown). The sodium hydroxide concentration in the aqueous solution used to make sodium hypochlorite ranges from about 20 to about 75 and preferably from about 35 to about 55 percent by weight.

Chlorine is added to crystallizer 1′, slurry chlorinators 2 or 5′, lime chlorinator 8 as well as fines chlorinator 10′ in either gases or liquid form. The chlorination reactions are carried out in any suitable chlorinator such as those described above, preferably in an evaporator-type chlorinator.

In the embodiments of Figure 1, where lime and sodium hypochlorite solution are added to mixing zone 1, the resulting mixing zone slurry has a lime concentration ranging from about 1 to about 25 and preferably from about 2 to about 20 weight percent and a sodium hypochlorite concentration ranging from about 1 to about 25 and preferably from about 2 to about 20 percent by weight. In the embodiment of Figure 2, when all or part of the lime is purified in lime chlorinator 8 and impurity separator 9 to form an aqueous solution of calcium hypochlorite and calcium chloride which is fed to mixing zone 1, the resulting mixing zone slurry has a lime concentration and sodium hypochlorite concentration within the above ranges as well as a concentration of calcium hypochlorite ranging from about 0 to about 30, and preferably from about 10 to about 26 percent by weight. Substantially all of the calcium chloride fed to mixing zone 1 reacts with sodium hypochlorite to form calcium hypochlorite and sodium chloride in accordance with Equation (3).

Dibasic calcium hypochlorite slurry added to mixing zone 1, and/or lime chlorinator 7 and/or mixing zone 5 has a lime concentration of from about 7 to about 10 weight percent, a calcium hypochlorite concentration of from about 7 to about 10 percent by weight and a sodium hypochlorite content of from about 6 to about 9 percent by weight.

Slurry chlorinator 2, at start-up, is preferably filled with a slurry of calcium hypochlorite solids suspended in an aqueous solution of sodium chloride. The excess lime or other alkali in the slurry is maintained below about 1.0 and preferably less than about 0.5 percent by weight of the slurry. The feed rate of mixing zone slurry and chlorine to slurry chlorinator 2 and the withdrawal rate of the resulting calcium hypochlorite paste are adjusted to achieve substantially complete chlorination of the calcium

values fed to slurry chlorinator 2 in the mixing zone slurry, while maintaining the total alkali concentration in slurry chlorinator 2 preferably below about 1.0 percent by weight of the slurry.

In the process described with reference to Figures 4 and 5, lime chlorine are reacted in crystallizer 1′ to produce dibasic calcium hypochlorite crystals. To form crystals having a size range which permits suitable separation rates in crystal separator 3′, an aqueous slurry containing from about 15 to about 40 percent by weight of lime, and chlorine are fed to crystallizer 1′. The reagents are added at rates which maintain an oxidation-reduction potential of the reaction mixture in the range of from about 690 to about 710, and preferably from about 695 to about 705 millivolts. Temperatures of the reaction mixture are kept in the range of from about 30° to about 50°C. and preferably from about 40° to about 45°C. The reaction mixture is chlorinated to provide a total alkalinity of from about 18 to about 22 and preferably from about 19 to about 21 percent by weight. Under these reaction conditions, hexagonal crystals of dibasic calcium hypochlorite are formed having sizes in the range of from about 20 to about 1200, preferably from about 100 to about 1000, and more preferably from about 500 to about 700 μm. In addition to dibasic calcium hypochlorite crystals, the slurry formed contains insoluble impurities found in the lime used as discussed above. The solution phase of the slurry is an aqueous solution of calcium chloride containing soluble calcium hypochlorite. The slurry from crystallizer 1′, having a solids content in the range of from about 15 to about 30 percent, is conveyed to impurity separator 2′.

Impurity separator 2′ is any suitable wet classifier capable of separating the small particulate insoluble impurities and fine crystals of dibasic calcium hypochlorite, i.e., those smaller than about 40 microns, from the coarse hexagonal crystals of dibasic calcium hypochlorite. Preferred as impurity separators are elutriators which can remove over 90 percent of the insoluble impurities and fine crystals. From impurity separator, 2′ a slurry is recovered containing high purity dibasic calcium hypochlorite crystals in an aqueous solution of calcium chloride and calcium hypochlorite. This slurry is conveyed to a crystal separator such as a centrifuge or filter which separates a moist cake or concentrated slurry of dibasic calcium hypochlorite crystals from a calcium chloride mother liquor containing from about 15 to about 30 weight percent of $CaCl_2$ and dissolved calcium hypochlorite. As discussed above, the calcium chloride mother liquor may be used in the production of calcium chloride hydrates. Where the embodiment of Figure 5 is employed, part or all of the calcium chloride solution from mud separator 11′ is transported to impurity separator 2′. In an added embodiment, a portion of the solution from mud separator 11′ may be used as the aqueous phase in preparing the lime slurry fed to crystallizer 1.

Dibasic calcium hypochlorite slurry added to mixing zone 4′ from crystal separator 3′ has a lime concentration of from about 18 to about 28 weight percent and a calcium hypochlorite concentration of from about 16 to about 25 percent by weight.

To mixing zone 4′, a sodium hypochlorite solution is fed along with the dibasic calcium hypochlorite slurry produced in crystal separator 3′ and the recycle dibasic calcium hypochlorite slurry from dibasic separator 9′. Sufficient amounts of sodium hypochlorite are used to provide the reaction mixture with at least 2 moles of NaOCl per mole of $Ca(OCl)_2 \cdot 2Ca(OH)_2$. Sodium hypochlorite reacts with the calcium chloride present and that formed during the chlorination of dibasic calcium hypochlorite. The reaction produces calcium hypochlorite and sodium chloride in accordance with the reaction expressed by Equation (3).

The ultimate water content in the mixing zone slurry is carefully controlled by adjusting the water content of the various feed streams to mixing zones 1 or 4′ or by the addition of water directly to mixing zone 4′. For example, the water content of the aqueous solution of calcium hypochlorite and calcium chloride (when lime purification of Figure 2 is used), the water content of any lime slurry added, the water content of the dibasic calcium hypochlorite slurry from crystal separator 3′, the water content of the sodium hypochlorite solution and the water content of recycled dibasic calcium hypochlorite slurry from dibasic separators 6 or 9′ are controlled to obtain a mixing zone slurry of the desired concentration range described above.

Paste from slurry chlorinators 2 or 5′, is predominately a slurry of neutral calcium hypochlorite in an aqueous solution of sodium chloride and calcium hypochlorite. The paste contains neutral calcium hypochlorite dihydrate crystals in a concentration of from about 10 to about 35 and preferably from about 15 to about 30 percent by weight. These crystals are predominately rectangular platelets which are only a few microns in thickness, but have substantially equal sides ranging from about 50 to about 300 μm in length with the major portion having sides ranging from about 100 μm to about 250 μm in length. Generally, less than about 10 percent of the crystals are "twin crystals" which entrain paste liquor, which are difficult to separate from the paste liquor, and which are difficult to dry. Since more than about 90 percent of the calcium hypochlorite dihydrate crystals obtained may be large platelets or cohesive aggomerates, there is a minimal amount of paste liquor entrained in the crystals during the separation in cake separators 3 or 6′, where, for example, cake separators 3 or 6′ are drum filters. The crystals are easier to separate from the paste liquor in cake separator 3 or 6′ and are easier to dry in dryers 4 or 7′ than crystals produced by conventional calcium hypochlorite techniques. In prior art techniques, more expensive high speed titanium centrifuges are necessary to obtain crystals of equivalent purity.

Moist cake from cake separators 3 or 6′ contains from about 40 to about 60 percent by weight of $Ca(OCl)_2$, from about 2 to about 15 percent by weight of NaCl, and from about 30 to about 50 percent by weight of water. This moist cake may be used directly in the treatment of water systems such as swimming

pools and the like, but is generally dried and stored prior to use. The moist cake is dried by known means, for example, using a spray dryer, rotary dryer, turbodryer or vacuum dryer where the appropriate temperature ranges are employed to reduce the water content to the desired level. The cake is dried, for example, in a turbodryer with hot air while maintaining the product temperature in the range from about 35° to about 110°C., and preferably from about 40° to about 95°C to give a product having a calcium hypochlorite content from about 65 to about 85, a water content below about 10 percent by weight and the bulk of the remainder being sodium chloride.

Paste liquor from cake separators 3 or 6′ generally has a sodium chloride concentration ranging from about 15 to about 22 percent, and preferably from about 17 to about 20 percent by weight, a calcium hypochlorite concentration ranging from about 7 to about 15 percent and preferably from about 8 to about 12 percent by weight, and a water content ranging from about 60 to about 75 percent and preferably from about 68 to about 73 percent by weight.

In one embodiment of the process of the present invention, a portion of the paste liquor may be recycled to mixing zones 1 or 4′, if desired, to improve control of the chlorination and heat transfer in slurry chlorinators 2 or 5′. Generally, from 0 to about 40 and preferably from about 0 to about 10 percent by weight of the paste liquor is recycled to mixing zones 1 or 4′, the balance being conveyed to dibasic crystallizers 6 or 8′.

As discussed above, paste liquor is reacted with a lime slurry in dibasic crystallizers 6 or 8′ to produce dibasic calcium hypochlorite crystals. To produce crystals having improved filterability while recovering substantial amounts of the calcium hypochlorite values in the paste filtrate, the reaction in dibasic crystallizers 6 or 8′ is carefully controlled with respect to the concentration of available chlorine and the total alkalinity.

To maintain the desired available chlorine concentration, dibasic crystallizers 6 or 8′ are operated to maintain the oxidation-reduction potential of the dibasic calcium hypochlorite slurry in the range of from about 690 to about 705 millivolts e.g. at temperatures of 30° to 50°C. Where the oxidation-reduction potential of the reaction mixture is above about 705 millivolts, the calcium hypochlorite concentration of the mother liquor recovered from dibasic separators 7 or 9′ is undesirably high. At oxidation-reduction potentials below about 690 millivolts, the separation rates of the slurry of dibasic calcium hypochlorite crystals in dibasic separator 7 are significantly reduced.

Total alkalinity of the reaction mixture of paste liquor and lime within dibasic crystallizers 6 or 8′ is maintained within the range of from about 2 to about 6, and preferably from about 3 to about 4 percent by weight. Total alkalinity of the reaction mixture is provided by the dibasic calcium hypochlorite crystals, any hemibasic calcium hypochlorite crystals, free lime and basic impurities present such as calcium carbonate, magnesium hydroxide, magnesium oxide, calcium oxide, magnesium carbonate and the like. Where ths total alkalinity is above about 6 percent, the presence of excessive amounts of free lime reduces the separation rate of the slurry in dibasic separators 7 or 9′. Reduction of the total alkalinity below about 2 percent results in the formation of crystals of hemibasic calcium hypochlorite and an undesirably high concentration of available chlorine in the mother liquor recovered from dibasic separators 7 or 9′.

The temperature of the reaction mixture of paste liquor and lime in dibasic crystallizer is maintained within the range of from about 30° to about 50°C., preferably at from about 35° to about 45°C., and more preferably at from about 40°C. Operating the dibasic crystallizer within these temperature ranges results in the growth of dibasic calcium hypochlorite crystals which are readily filtered, are stable, and where "fines" are minimized. When temperatures below about 30°C. are employed in the dibasic crystallizer, the crystals grown are very fine and result in low separation rates in dibasic separators 7 or 9′. At temperatures above about 45°C., the crystals are readily filtered but the rate of decomposition increases resulting in the formation of excessive amounts of calcium chlorates. The slurry, dibasic calcium hypochlorite, produced in dibasic crystallizer 6 has a solids content in the range of from about 7 to about 10 percent; and the slurry produced in dibasic crystallizer 8′ has a solids content in the range of from about 5 to about 20 percent, and preferably from about 10 to about 15 percent.

The slurry of dibasic calcium hypochlorite crystals from dibasic crystallizer 6 or 8′ is fed to dibasic separator 7 or 9′ respectively where dibasic calcium hypochlorite crystals are separated from a dibasic mother liquor. Dibasic separator 7 or 9′ is a filter, centrifuge, or any other suitable solid-liquid separating device capable of separating a slurry or moist cake of dibasic calcium hypochlorite crystals from a sodium chloride mother liquor, an aqueous solution of dibasic calcium hypochlorite and sodium chloride. The dibasic calcium hypochlorite crystals are preferably separated from separator 7 or 9′ as a slurry or thickened slurry in the mother liquor containing from about 60 to about 70 percent solids or from about 45 to 65 percent solids respectively. As stated above, this slurry is recycled to mixing zone 1 or 4′, and/or lime chlorinator 8. A portion may also be used to prepare the lime slurry fed to dibasic crystallizer 8′. Similarly, a portion of the sodium chloride mother liquor may be used in preparing the lime slurry fed to dibasic crystallizer 8′.

In one embodiment, prior to feeding the slurry of dibasic calcium hypochlorite crystals to dibasic separator 7, all or a portion of the slurry is passed through a fines collector such as a centrifuge or hydroclone to remove any fine crystals present in the slurry. These fine crystals are recycled to dibasic crystallizer 6.

In another embodiment, prior to feeding the slurry of dibasic calcium hypochlorite crystals from

dibasic crystallizer 8' to dibasic separator 9', all or a portion of the slurry is passed through an impurity separator such as an elutriator to remove insoluble impurities and fine crystals of dibasic calcium hypochlorite present in the slurry. These fine crystals and insoluble impurities may be conveyed to a fines chlorinator and mud separator as previously discussed.

Dibasic mother liquor recovered from dibasic separator 6 is an aqueous solution containing sodium chloride and small amounts of dibasic calcium hypochlorite, i.e., from about 0 to about 0.1 percent by weight of $Ca(OCl)_2 \cdot 2Ca(OH)_2$. As stated above, dibasic mother liquor may be used as the aqueous solution in forming the lime slurries used in the process. Dibasic mother liquor may also be treated with sodium hydroxide to recover the remaining hyopchlorite values as lime. Similarly, sodium chloride mother liquor recovered from dibasic separator 9' is an aqueous solution containing sodium chloride and small amounts of dissolved calcium hypochlorite, i.e. from about 2 to about 6 percent by weight of a $Ca(OCl)_2$. This mother liquor may be used as the aqueous solution in forming the lime slurry fed to dibasic crystallizer 8'. Sodium chloride mother liquor may also be treated with sodium hydroxide to recover the remaining hypochlorite values as sodium hypochlorite and the calcium values as lime. The lime produced in these ways is highly active and contains above 95% $Ca(OH)_2$. The dilute slurry of lime produced by the reaction of sodium hydroxide with dibasic mother liquor or sodium chloride mother liquor is fed to a separator to separate a lime slurry from a sodium chloride solution or from a sodium chloride and sodium hypochlorite solution. The lime slurry may be recycled to mixing zone 1 and/or mixing zone 5 or to crystallizer 1' and/or dibasic crystallizer 8'. The sodium chloride solution recovered may be recycled as the solution in forming lime slurries used in the process. Where possible, the sodium chloride solution, essentially free of calcium hypochlorite and calcium hydroxide, can be fed as brine to electrolytic cells for the production of chlorine and alkali metal hydroxides. The salt solution may also be discarded, without further treatment, to water bodies without resulting in undesired pollution.

The process according to the invention provides an efficient method of recovering calcium hypochlorite values from process liquors. This is accomplished while reducing energy costs expended in the recovery of waste solutions containing Ca $(OCl)_2$ using the processes of U.S. Patents Nos. 3,895,099 and 4,196,094. The energy savings result from eliminating the need to evaporate substantial amounts of water, i.e., over 1000 lbs. per ton (450 kg per 1000 kg) of calcium hypochlorite product. The process further provides rapid recovery of dibasic calcium hypochlorite for reuse in a neutral calcium hypochlorite process by optimizing crystal growth conditions and separation rates. Raw material costs are substantially reduced as the high purity lime required for most conventional commercial calcium hypochlorite processes need not be used and lime from virtually any source can be employed.

The process provides operating controls such that the available chlorine content in the mother liquor of the dibasic calcium hypochlorite slurry can be maintained between about 3.0 and 3.5 percent; the dibasic calcium hypochlorite crystals produced can be maintained at from about 300 to about 1000 μm in size; and excess lime held to a minimum. These controls achieve high filtration rates for the dibasic calcium hypochlorite slurry, for example, of from about 100 to about 120 gallons per hour per square foot (about 35 to about 42 litres per hour per square metre) of filter medium. This compares to filtration rates of 10 to 12 gallons per hour per square foot (3.5 to 4.2 litres per hour per square metre) of filter medium employing processes of the prior art.

The process may be operated continuously or batchwise, but is preferably carried out on a continuous basis which permits higher rates of chlorination and thus increased rates of production. Continuous chlorination also produces calcium hypochlorite dihydrate crystals which are more easily separated by the solid-liquid method of separation employed and which are easier to dry. Calcium hypochlorite values are efficiently recovered from process liquors in the process of the present invention while reducing energy costs and minimizing the calcium hypochlorite values in treated effluents. The process further provides highly pure dibasic calcium hypochlorite crystals for reuse in a neutral calcium hypochlorite process by optimizing crystal growth conditions and effectively removing insoluble impurities. Raw material costs are substantially reduced as the high purity lime required for most conventional commercial calcium hypochlorite processes need not be used and lime from virtually any source can be employed. Of the total amount of lime employed in one embodiment of the process from about 70 to about 90 and preferably from about 75 to about 85 percent by weight is added at crystallizer 1'. The remaining lime, from about 10 to about 30 and preferably from about 15 to about 25 percent by weight is added at dibasic crystallizer 8'.

The following non-limiting Examples are presented to illustrate the invention more fully. All parts and percentages are by weight unless otherwise specified.

Example 1

Using the process illustrated in Figure 1, 248 parts of lime were slurried in 1092 parts of a 32% sodium hypochlorite solution in a mixing tank provided with an agitator. The lime contained 95 to 98 parts by weight $Ca(OH)_2$. To the mixing tank was added a slurry prepared from 415 parts of a filter cake of dibasic calcium hypochlorite crystals in 650 parts of water. In mixing zone 1, the mixture was blended to form a mixing zone slurry of lime and dibasic calcium hypochlorite crystals. The slurry was fed continuously to a cooled chlorinating vessel equipped with an agitator. Chlorine gas (313 parts) was continuously fed to the chlorinator and 2718 parts of a neutral calcium hypochlorite paste were produced. The feed rate of the

chlorine gas and mixing zone slurry to the chlorinator were adjusted to produce a paste having a total alkalinity of 0.4 percent.

The neutral calcium hypochlorite paste was conveyed to a filter which separated the paste into 1352 parts of a moist cake of neutral calcium hypochlorite dihydrate and 1366 parts of paste liquor. The moist cake containing 48% $Ca(OCl)_2$, 8% NaCl and 45% water, was transferred to a dryer. A dried neutral calcium hypochlorite product was recovered from the dryer containing 73 percent $Ca(OCl)_2$, 21.6 percent NaCl and 6.4 percent $H_2O$.

The paste liquor, an aqueous solution of dibasic calcium hypochlorite and sodium chloride, was fed to a tank, a jacketed crystallizer equipped with an agitator. The tank had an external recycle loop containing a temperature sensing element and an oxidation-reduction potential sensor. Lime (99 parts) was slurried in 2672 parts of dibasic calcium hypochlorite mother liquor from a previous step and reacted with the 1366 parts of paste liquor in the continuous crystallizer to form 4137 parts of a dibasic calcium hypochlorite slurry. This slurry was continuously filtered on a rotary drum filter to produce 565 parts of moist dibasic calcium hypochlorite cake and 3573 parts of the dibasic calcium hypochlorite mother liquor. From this 3573 parts of dibasic mother liquor, 2672 parts were recycled to prepare the lime slurry mentioned above and 900 parts were further treated to prepare a brine for electrolytic cells in a chlor-alkali plant. Addition of the paste liquor and lime slurry to the crystallizer were controlled to maintain the oxidation-reduction potential of the reaction mixture at a range of 692 to 698 millivolts. Heating fluid circulating through the jacket maintained the temperature in the crystallizer at 40°C. A slurry of dibasic calcium hypochlorite crystals was produced in the crystallizer. The slurry was fed to a filter which separated a moist cake of dibasic calcium hypochlorite crystals from a mother liquor containing 17.3 percent NaCl, 3.6 percent $Ca(OCl)_2$ and having 0.1—0.2 percent total alkalinity. The moist cake of dibasic calcium hypochlorite crystals was recycled to the mixing tank to prepare additional mixing zone slurry.

Example 2

An aqueous slurry of lime (active content 95%) containing about 25 percent solids was prepared. The lime slurry was conveyed to a reactor equipped with an agitator. Chlorine gas was fed to the reactor and the lime slurry chlorinated at ambient temperature until the total alkalinity of the slurry was about 0.3 percent. The chlorinated lime slurry was filtered and a clarified solution of calcium chloride and calcium hypochlorite recovered as the filtrate. The filtrate (2400 parts) was mixed in a reactor with 400 parts of water, 8 parts of lime and 540 parts of calcium chloride. To 1540 parts of this mixture of calcium hypochlorite, lime and calcium chloride was added 2000 parts of a lime slurry having 35 percent by weight of $Ca(OH)_2$. This mixture and chlorine gas was continuously fed to a separate reactor which was maintained by cooling at a temperature of 44°C. and dibasic calcium hypochlorite crystals were produced as a slurry in a calcium chloride and calcium hypochlorite solution. The dibasic slurry was analyzed and found to contain 9.99 percent $Ca(OCl)_2$, 9.09 percent $Ca(OH)_2$, 16.21 percent $CaCl_2$ and 64.71 percent $H_2O$. The dibasic slurry was fed to the upper part of an elutriator at a rate of 45 parts per minute. The elutriant, initially an aqueous solution of calcium chloride, was fed to the lower part of the elutriator at a rate of 104 parts per minute. Recovered as the underflow at a rate of 30 parts per minute was a thickened, purified slurry of dibasic calcium hypochlorite. Insoluble inert materials were removed from the elutriator as the overflow and filtered. The clear filtrate recovered was recycled to the elutriator as the elutriant. Insoluble impurities removed from the filter were disposed of a solid wastes. The dibasic slurry was filtered on a vacuum filter to separate a wet cake of dibasic calcium hypochlorite crystals from a dibasic mother liquor. The composition of the wet cake was determined to be 23.55 percent $Ca(OCl)_2$, 26.33 percent $Ca(OH)_2$, 11.56 percent $CaCl_2$ and 38.55 percent $H_2O$. The dibasic mother liquor contained 2.90 percent $Ca(OCl)_2$, 0.08 percent $Ca(OH)_2$, 17.29 percent $CaCl_2$ and 79.72 percent $H_2O$. 260 Parts of a typical wet cake of dibasic calcium hypochlorite crystals were fed to a mixing tank to which also was added 323 parts of a nominal 32 percent sodium hypochlorite solution and 100 parts of water. In the mixing tank, the mixture was blended to form a mixing zone slurry of dibasic calcium hypochlorite crystals in a solution of calcium hypochlorite, sodium hypochlorite and sodium chloride. The slurry was fed continuously to a cooled chlorinating vessel equipped with an agitator. Chlorine gas (65 parts) was continuously fed to the chlorinator and 748 parts of a neutral calcium hypochlorite paste were produced. The feed rate of the chlorine gas and mixing zone slurry to the chlorinator were adjusted to produce a paste having a total alkalinity of 0.5 percent.

The neutral calcium hypochlorite paste was conveyed to a filter which separated the paste into a moist cake of neutral calcium hypochlorite dihydrate and paste liquor. Moist cake containing 45.2 percent $Ca(OCl)_2$, 8.7 percent NaCl and 43 percent $H_2O$ on the filter was transferred to a dryer. A dried neutral calcium hypochlorite product was recovered from the dryer containing 73.8 percent $Ca(OCl)_2$, 13.3 percent NaCl and 6.2 percent $H_2O$.

Paste liquor, an aqueous solution of calcium hypochlorite and sodium chloride was fed to a tank, a jacketed crystallizer equipped with an agitator. The tank had an external recycle loop containing a temperature sensing element and an oxidation-reduction potential sensor. Lime (16 parts) was slurried in 56 parts of water containing 28 parts of sodium chloride. Addition of paste liquor and lime slurry were controlled to maintain the oxidation-reduction potential of the reaction mixture at a range of 690 to about 705 millivolts. Heating fluid circulating through the jacket maintained the temperature in the crystallizer at about 40°C. A slurry of dibasic calcium hypochlorite crystals was produced in the crystallizer. The slurry

was fed to a filter which separated a moist cake of dibasic calcium hypochlorite crystals (48 parts) from a mother liquor containing 23 percent NaCl, 3 percent $Ca(OCl)_2$ and having 0.1 percent total alkalinity. The moist cake of dibasic calcium hypochlorite crystals was recycled to the mixing tank for use in a subsequent batch.

**Claims**

1. A process for producing neutral calcium hypochlorite which comprises:

a) admixing lime, an alkali metal hypochlorite and dibasic calcium hypochlorite crystals in a mixing zone to form a mixing zone slurry;

b) reacting said mixing zone slurry with chlorine to form a paste of neutral calcium hypochlorite;

c) separating said paste into a cake of neutral calcium hypochlorite and a paste liquor;

d) reacting said paste liquor with a slurry of lime in a crystallizer to form a slurry of dibasic calcium hypochlorite crystals in a mother liquor;

e) separating said crystals of dibasic calcium hypochlorite crystals from said dibasic mother liquor; and

f) recycling said dibasic calcium hypochlorite crystals to said mixing zone.

2. The process of claim 1 in which the total alkalinity of said slurry of dibasic calcium hypochlorite is maintained at from about 2 to about 6 percent by weight.

3. The process of claim 2 in which a portion of said dibasic calcium hypochlorite mother liquor is mixed with lime to form a lime slurry and said lime slurry fed to said mixing zone

4. The process of claim 2 in which said slurry of dibasic calcium hypochlorite is maintained at a temperature of from about 30° to about 50°C.

5. The process of claim 4 in which lime is admixed with a portion of said recycle dibasic calcium hypochlorite slurry and reacted with said paste liquor.

6. The process of claim 4 in which said lime is admixed with a portion of said dibasic calcium hypochlorite mother liquor and reacted with said paste liquor.

7. The process of claim 4 in which said slurry of dibasic calcium hypochlorite in a mother liquor is maintained at an oxidation reduction potential in the range of from about 690 to about 705 millivolts.

8. The process of claim 1 in which lime is slurried in a liquid selected from water, alkali metal chloride brines, and dibasic calcium hypochlorite mother liquor.

9. The process of claim 7 in which said slurry of dibasic calcium hypochlorite is maintained at a temperature of from about 35° to about 45°C.

10. The process of claim 7 in which said dibasic calcium hypochlorite slurry is added to an elutriator to separate insoluble impurities from dibasic calcium hypochlorite crystals.

11. A process according to any one of the preceding claims wherein step a) is replaced by the following steps:

i) reacting an aqueous slurry of lime containing insoluble impurities with chlorine to form a first slurry of dibasic calcium hypochlorite crystals and insoluble impurities in a calcium chloride mother liquor;

ii) separating said insoluble impurities from said first slurry of dibasic calcium hypochlorite crystals in said calcium chloride solution;

iii) separating said dibasic calcium hypochlorite crystals from said calcium chloride mother liquor; and

iv) admixing said dibasic calcium hypochlorite crystals, an alkali metal hypochlorite and recycle dibasic calcium hypochlorite crystals in a mixing zone to form the mixing zone slurry.

12. The process of claim 11 in which said separation of said insoluble impurities from said first slurry of dibasic calcium hypochlorite crystals is accomplished by a method selected from elutriation, sedimentaion, air flotation, hydraulic classification and hydrocycloning.

13. The process of claim 12 in which said insoluble impurities include fine crystals of dibasic calcium hypochlorite and said fine crystals are reacted with chlorine to form a slurry of insoluble impurities in a calcium hypochlorite solution.

14. The process of claim 12 in which said lime slurry fed to said first crystallizer contains from about 70 to about 90 percent of the total amount of lime employed in said process.

15. The process of claim 13 in which said dibasic calcium hypochlorite crystals have sizes in the range of from about 100 to about 1000 microns.

16. The process of claim 15 in which said separation method is elutriation.

17. The process of claim 13 in which said insoluble impurities are separated from said calcium hypochlorite solution.

18. The process of claim 16 in which said calcium hypochlorite solution is employed as the elutriant.

19. The process of claim 15 in which the total alkalinity of the slurry of dibasic calcium hypochlorite crystals in step d) is maintained at from about 18 to about 22 percent by weight.

**Patentansprüche**

1. Verfahren zur Herstellung von neutralem Calciumhypochlorit, bei dem man

a) Kalk, ein Alkalihypochlorit und zweibasische Hypochloritkristalle in einer Mischzone unter Bildung eines Mischzoneneschlammes vermischt,

b) diesen Mischzonenschlamm mit Chlor unter Bildung eines Teiges von neutralem Calciumhypochlorit umsetzt,

c) diesen Teig in einen Kuchen von neutralem Calciumhypochlorit und eine Teigflüssigkeit trennt,

d) diese Teigflüssigkeit mit einem Schlamm von Kalk in einem Kristallisationsbehälter unter Bildung eines Schlammes von zweibasischen Calciumhypochloritkristallen in einer Mutterlauge umsetzt,

e) diese Kristalle von zweibasischem Calciumhypochlorit von der zweibasischen Mutterlauge trennt und

f) diese zweibasischen Calciumhypochloritkristalle zu der Mischzone zurückführt.

2. Verfahren nach Anspruch 1, bei dem man die Gesamtalkalinität des Schlammes von zweibasischem Calciumhypochlorit auf etwa 2 bis etwa 6 Gew.-% hält.

3. Verfahren nach Anspruch 2, bei dem man einen Teil der zweibasischen Calciumhypochlorit-Mutterlauge mit Kalk unter Bildung eines Kalkschlammes vermischt und diesen Kalkschlamm in die Mischzone einspeist.

4. Verfahren nach Anspruch 2, bei dem man den Schlamm von zweibasischem Calciumhypochlorit auf einer Temperatur von etwa 30° bis etwa 50°C hält.

5. Verfahren nach Anspruch 4, bei dem man Kalk mit einem Teil des zweibasischen Calciumhypochlorit-Rückführschlammes vermischt und mit der Teigflüssigkeit umsetzt.

6. Verfahren nach Anspruch 4, bei dem man den Kalk mit einem Teil der zweibasischen Calciumhypochlorit-Mutterlauge vermischt und mit der Teigflüssigkeit umsetzt.

7. Verfahren nach Anspruch 4, bei dem man den Schlamm von zweibasischem Calciumhypochlorit in einer Mutterlauge auf einem Oxidations-Reduktions-Potential im Bereich von etwa 690 bis etwa 705 Millivolt hält.

8. Verfahren nach Anspruch 1, bei dem man Kalk in einer Flüssigkeit aufschlämmt, die aus Wasser, Alkalichloridlösungen und Mutterlauge von zweibasischem Calciumhypochlorit ausgewählt ist.

9. Verfahren nach Anspruch 7, bei dem man den Schlamm von zweibasischem Calciumhypochlorit auf einer Temperatur von etwa 35° bis etwa 45°C hält.

10. Verfahren nach Anspruch 7, bei dem man den zweibasischen Calciumhypochloritschlamm einem Dekantierbehälter zuführt, um unlösliche Verunreinigungen von zweibasischen Calciumhypochloritkristallen zu trennen.

11. Verfahren nach einem der vorausgehenden Ansprüche, bei dem Stufe a) durch die folgenden Stufen ersetzt wird, in denen man:

i) einen wäßrigen Kalkschlamm, der unlösliche Verunreinigungen enthält, mit Chlor unter Bildung eines festen Schlammes von zweibasischen Calciumhypochloritkristallen und unlöslichen Verunreinigungen in einer Calciumchloridmutterlauge umsetzt,

ii) die unlöslichen Verunreinigungen von dem ersten Schlamm von zweibasischen Calciumhypochloritkristallen in der Calciumchloridlösung abtrennt,

iii) die zweibasischen Calciumhypochloritkristalle von der Calciumchloridmutterlauge abtrennt und

iv) die zweibasischen Calciumhypochloritkristalle, ein Alkalihypochlorit und zweibasische Calciumhypochlorit-Rückführkristalle in einer Mischzone unter Bildung des Mischzonenschlammes vermischt.

12. Verfahren nach Anspruch 11, bei dem man die Trennung der unlöslichen Verunreinigungen von dem ersten Schlamm von zweibasischen Calciumhypochloritkristallen nach einer der Methoden des Eluierens, Sedimentierens, der Luftflotation, des hydraulischen Klassierens und der Hydrozyklonbehandlung durchführt.

13. Verfahren nach Anspruch 12, bei dem die unlöslichen Verunreinigungen feine Kristalle von zweibasischem Calciumhypochlorit enthalten und man diese feinen Kristalle mit Chlor unter Bildung eines Schlammes von unlöslichen Verunreinigungen in einer Calciumhypochloritlösung umsetzt.

14. Verfahren nach Anspruch 12, bei dem der im ersten Kristallisierbehälter zugeführte Kalkschlamm etwa 70 bis etwa 90% der gesamten in dem Verfahren verwendeten Kalkmenge enthält.

15. Verfahren nach Anspruch 13, bei dem zweibasischen Calciumhypochloritkristalle Größen im Bereich von etwa 100 bis etwa 1000 Mikron besitzen.

16. Verfahren nach Anspruch 15, bei dem die Abtrennmethode ein Aufschlämmen und Dekantieren ist.

17. Verfahren nach Anspruch 13, bei dem man die unlöslichen Verunreinigungen von der Calciumhypochloritlösung trennt.

18. Verfahren nach Anspruch 16, bei dem man die Calciumhypochloritlösung also das Aufschlämmittel verwendet.

19. Verfahren nach Anspruch 15, bei dem man die Gesamtalkanilität des Schlammes von zweibasischen Calciumhypochloritkristallen in der Stufe d) auf etwa 18 bis etwa 22 Gew.-% hält.

**Revendications**

1. Un procédé pour la production d'hypochlorite de calcium neutre qui comprend:

a) le mélange de chaux, d'un hypochlorite de métal alcalin et de cristaux d'hypochlorite de calcium dibasique dans une zone de mélange pour former une suspension de zone de mélange;

b) la réaction de ladite suspension de zone de mélange avec du chlore pour former une pâte d'hypochlorite de calcium neutre;

c) la séparation de ladite pâte en un gâteau d'hypochlorite de calcium neutre et une liqueur de pâte;

d) la réaction de ladite liqueur de pâte avec une suspension de chaux dans une unité de cristallisation pour former une suspension de cristaux d'hypochlorite de calcium dibasique dans une liqueur mère;

e) la séparation desdits cristaux d'hypochlorite de calcium dibasique d'avec ladite liqueur mère dibasique; et

f) le recyclage desdits cristaux d'hypochlorite de calcium dibasique dans ladite zone de mélange.

2. Le procédé de la revendication 1 dans lequel l'alcalinité totale de ladite suspension d'hypochlorite de calcium dibasique est maintenue entre environ 2 et environ 6% en poids.

3. Le procédé de la revendication 2 dans lequel une portion de ladite liqueur mère d'hypochlorite de calcium dibasique est mélangée avec de la chaux pour former une suspension de chaux et ladite suspension de chaux est conduite dans ladite zone de mélange.

4. Le procédé de la revendication 2 dans lequel ladite suspension d'hypochlorite de calcium dibasique est maintenue à une température d'environ 30° à environ 50°C.

5. Le procédé de la revendication 4 dans lequel ladite chaux est mélangée avec une portion de ladite suspension d'hypochlorite de calcium dibasique recyclée et est mise à réagir avec ladite liqueur de pâte.

6. Le procédé de la revendication 4 dans lequel ladite chaux est mélangée à une portion de ladite liqueur mère d'hypochlorite de calcium dibasique et mise à réagir avec ladite liqueur de pâte.

7. Le procédé de la revendication 4 dans lequel ladite suspension d'hypochlorite de calcium dibasique dans une liqueur mère est maintenue à un potential d'oxydo-réduction dans la gamme d'environ 690 à environ 705 millivolts.

8. Le procédé de la revendication 1 dans lequel la chaux est mise en suspension dans un liquide choisi parmi l'eau, les saumures de chlorure de métal alcalin et la liqueur mère d'hypochlorite de calcium dibasique.

9. Le procédé de la revendication 7 dans lequel ladite suspension d'hypochlorite de calcium dibasique est maintenue à une température d'environ 35° à environ 45°C.

10. Le procédé de la revendication 7 dans lequel ladite suspension d'hypochlorite de calcium dibasique est ajoutée à une unité d'élutriation pour séparer les impuretés insolubles d'avec les cristaux d'hypochlorite de calcium dibasique.

11. Un procédé selon l'une quelconque des revendications précédentes, dans lequel le stade a) est remplacé par les stades suivants:

i) réaction d'une suspension aqueuse de chaux contenant des impuretés insolubles avec du chlore pour former une première suspension de cristaux d'hypochlorite de calcium dibasique et d'impuretés insolubles dans une liqueur mère de chlorure de calcium;

ii) séparation desdites impuretés insolubles d'avec ladite première suspension de cristaux d'hypochlorite de calcium dibasique dans ladite solution de chlorure de calcium;

iii) séparation desdits cristaux d'hypochlorite de calcium dibasique d'avec ladite liqueur mère de chlorure de calcium; et

iv) mélange desdits cristaux d'hypochlorite de calcium dibasique, d'un hypochlorite de métal alcalin et de cristaux d'hypochlorite de calcium dibasique recyclés dans une zone de mélange pour former la suspension de zone de mélange.

12. Le procédé de la revendication 11 dans lequel ladite séparation desdites impuretés insolubles d'avec ladite première suspension de cristaux d'hypochlorite de calcium dibasique est effectuée selon un procédé choisi parmi l'élutriation, la sédimentaion, la flottation pneumatique, le classement hydraulique et le traitement avec un épaississeurcycline.

13. Le procédé de la revendication 12 dans lequel lesdites impuretés insolubles comprennent des cristaux fins d'hypochlorite de calcium dibasique et lesdits cristaux fins sont mis à réagir avec du chlore pour former une suspension d'impuretés insolubles dans une solution d'hypochlorite de calcium.

14. Le procédé de la revendication 12 dans lequel ladite suspension de chaux dont on alimente ladite première unité de cristallisation contient d'environ 70 à environ 90% de la quantité totale de chaux employée dans ledit procédé.

15. Le procédé de la revendication 13 dans lequel lesdits cristaux d'hypochlorite de calcium dibasique ont des tailles dans la gamme d'environ 100 à environ 1 000 microns.

16. Le procédé de la revendication 15 dans lequel ledit procédé de séparation est l'élutriation.

17. Le procédé de la revendication 13 dans lequel lesdites impuretés insolubles sont séparées d'avec ladite solution d'hypochlorite de calcium.

18. Le procédé de la revendication 16 dans lequel ladite solution d'hypochlorite de calcium est employée comme agent d'élutriation.

19. Le procédé de la revendication 15 dans lequel l'alcalinité totale de la suspension de cristaux d'hypochlorite de calcium dibasique dans le stade d) est maintenue entre environ 18 et environ 22% en poids.

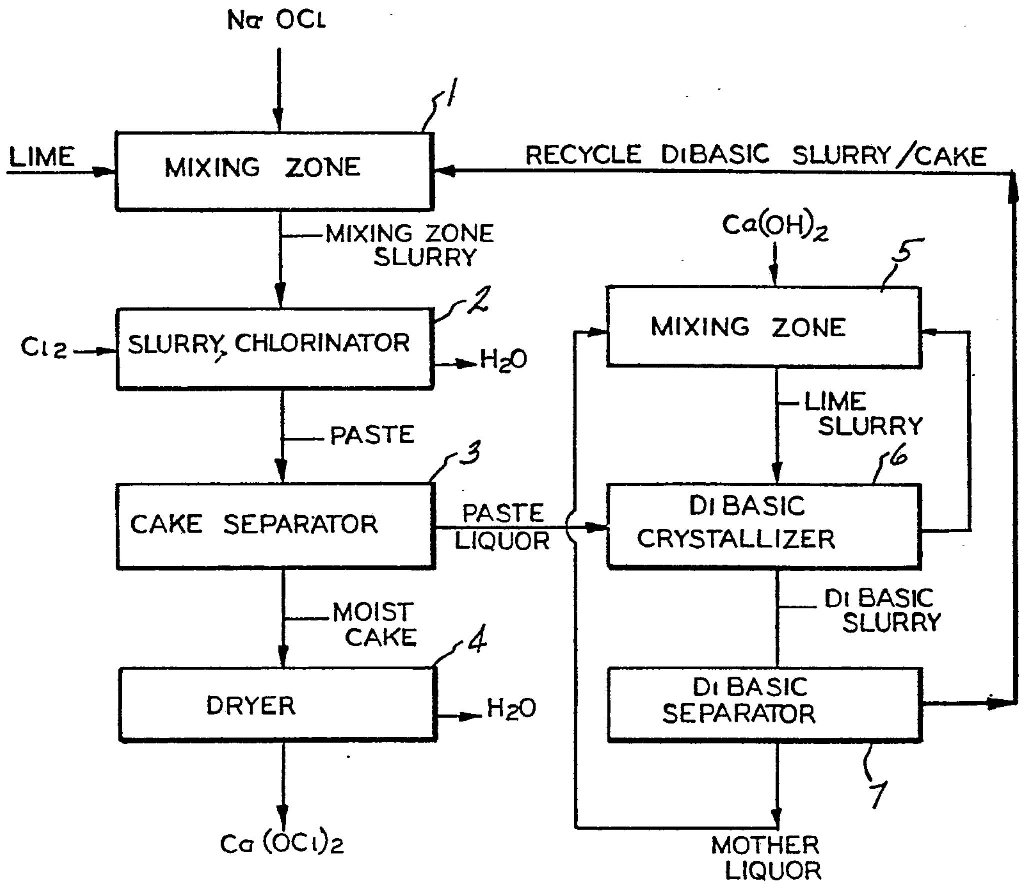
Na OCl
LIME
MIXING ZONE
1
RECYCLE DIBASIC SLURRY/CAKE
MIXING ZONE SLURRY
Ca(OH)2
5
2
Cl2
SLURRY CHLORINATOR
H2O
MIXING ZONE
LIME SLURRY
PASTE
3
6
CAKE SEPARATOR
PASTE LIQUOR
DIBASIC CRYSTALLIZER
MOIST CAKE
4
DIBASIC SLURRY
DRYER
H2O
DIBASIC SEPARATOR
7
Ca (OCl)2
MOTHER LIQUOR

FIG-1

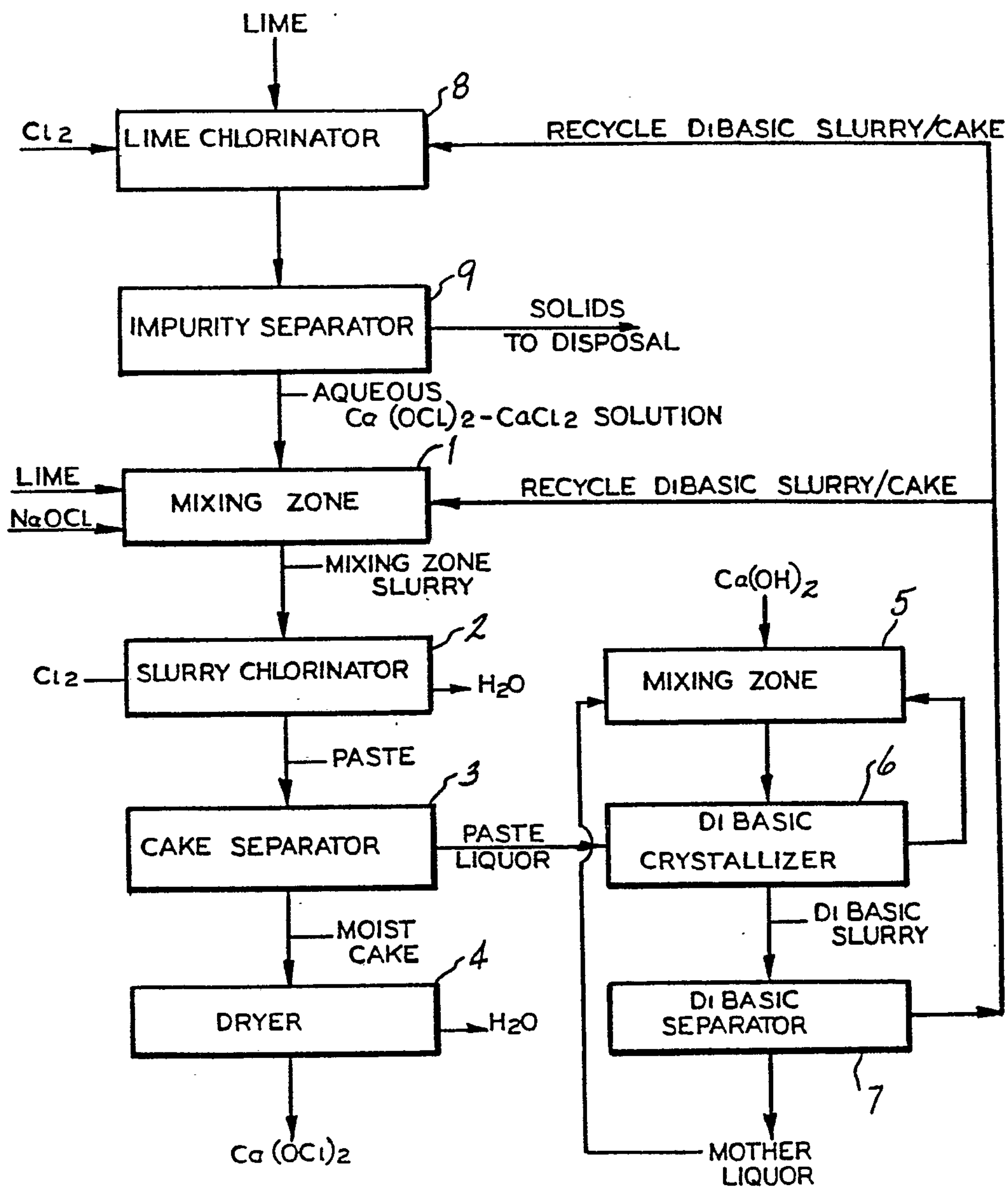
LIME
$Cl_2$
LIME CHLORINATOR
8
RECYCLE DIBASIC SLURRY/CAKE
IMPURITY SEPARATOR
9
SOLIDS
TO DISPOSAL
AQUEOUS
$Ca(OCl)_2$-$CaCl_2$ SOLUTION
LIME
NaOCL
MIXING ZONE
1
RECYCLE DIBASIC SLURRY/CAKE
MIXING ZONE
SLURRY
$Ca(OH)_2$
5
$Cl_2$
SLURRY CHLORINATOR
2
$H_2O$
MIXING ZONE
PASTE
CAKE SEPARATOR
3
PASTE
LIQUOR
DI BASIC
CRYSTALLIZER
6
MOIST
CAKE
DI BASIC
SLURRY
DRYER
4
$H_2O$
DI BASIC
SEPARATOR
7
$Ca(OCl)_2$
MOTHER
LIQUOR

FIG-2

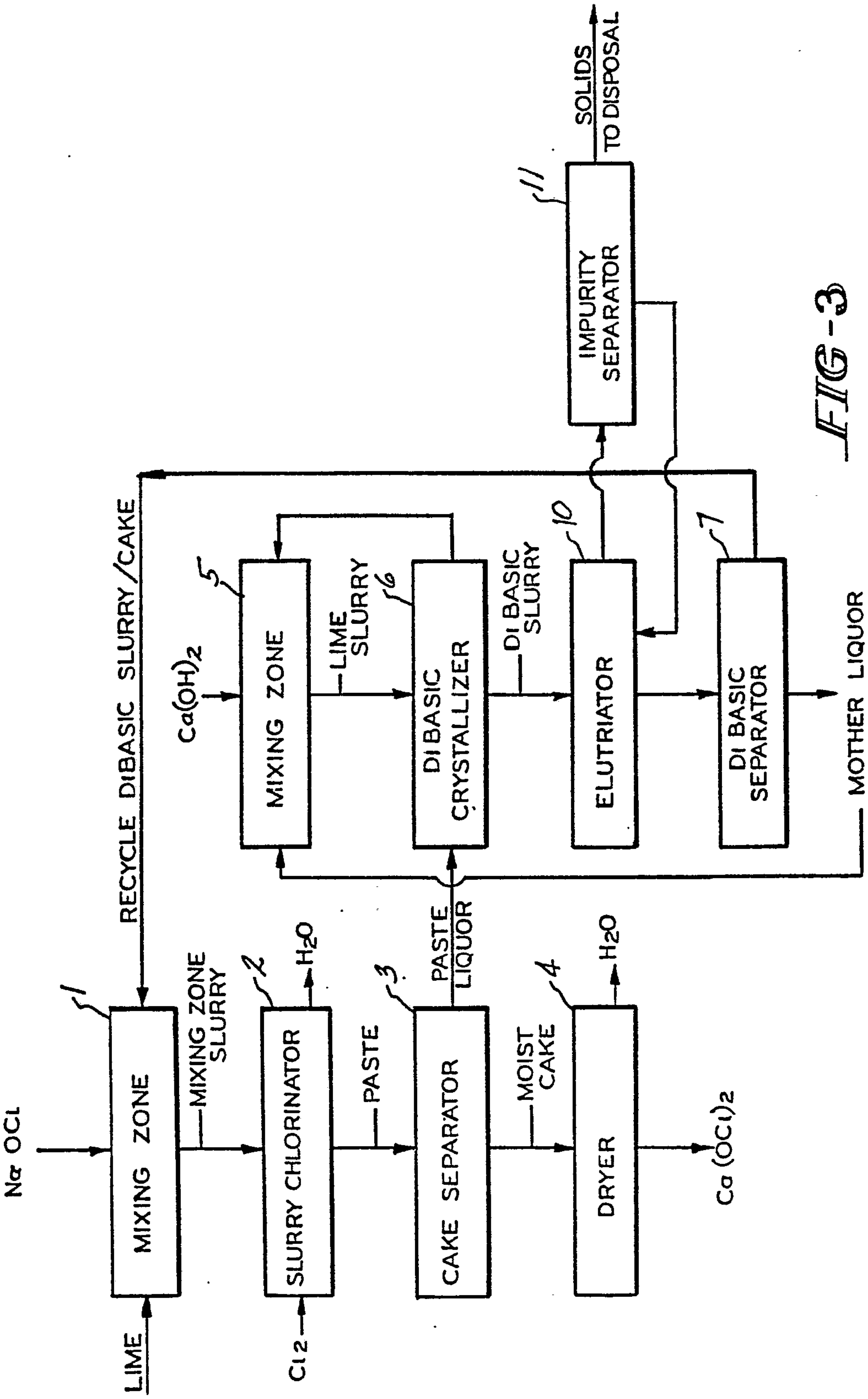

NaOCl
LIME
MIXING ZONE
1
MIXING ZONE SLURRY
Cl2
SLURRY CHLORINATOR
2
H2O
PASTE
CAKE SEPARATOR
3
PASTE LIQUOR
MOIST CAKE
DRYER
4
H2O
Ca(OCl)2
RECYCLE DIBASIC SLURRY/CAKE
Ca(OH)2
MIXING ZONE
5
LIME SLURRY
DI BASIC CRYSTALLIZER
6
DI BASIC SLURRY
ELUTRIATOR
10
DI BASIC SEPARATOR
7
MOTHER LIQUOR
IMPURITY SEPARATOR
11
SOLIDS TO DISPOSAL


FIG-3

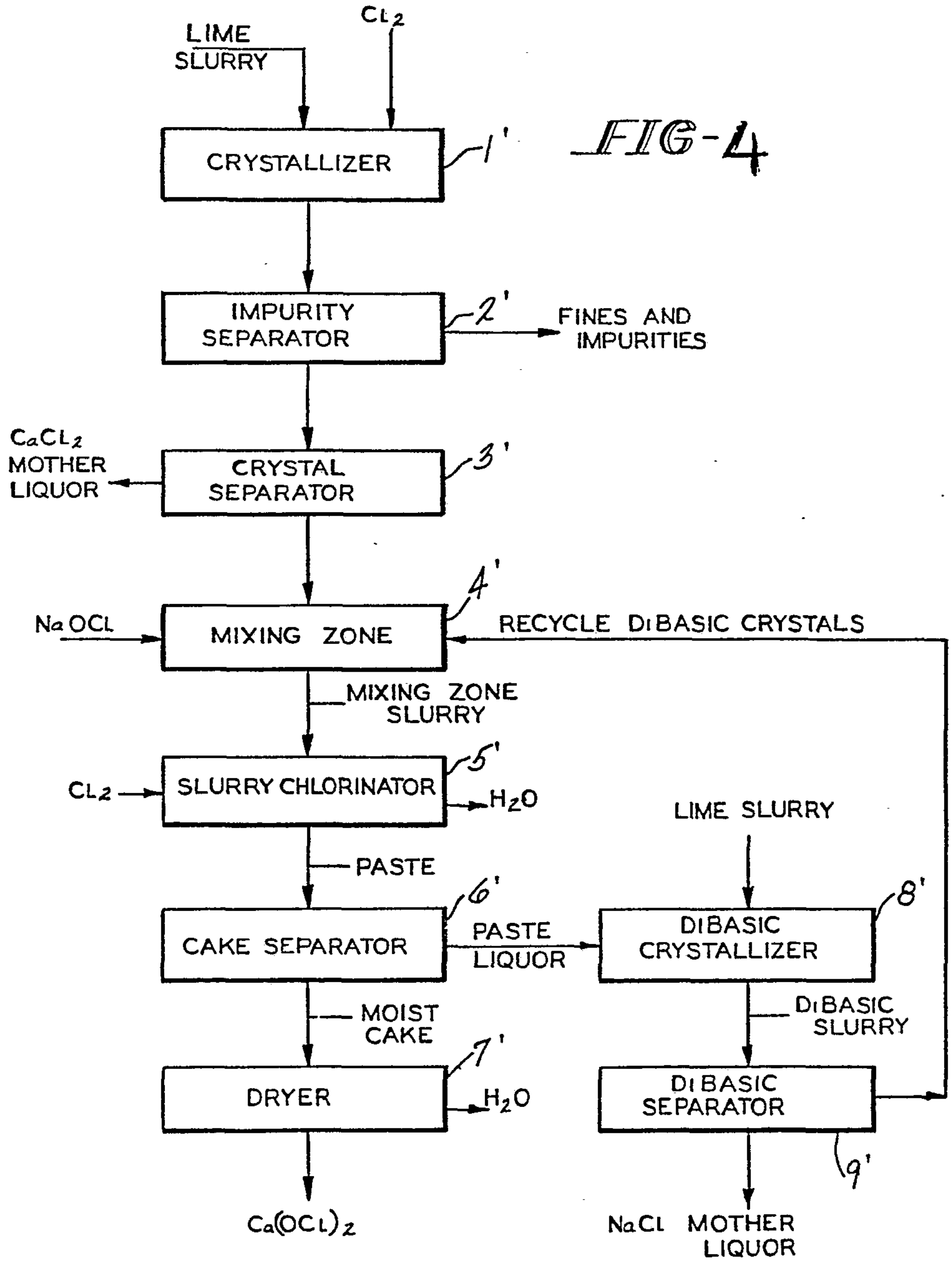
LIME SLURRY
$Cl_2$
CRYSTALLIZER
1'
IMPURITY SEPARATOR
2'
FINES AND IMPURITIES
$CaCl_2$ MOTHER LIQUOR
CRYSTAL SEPARATOR
3'
NaOCl
MIXING ZONE
4'
RECYCLE DIBASIC CRYSTALS
MIXING ZONE SLURRY
$Cl_2$
SLURRY CHLORINATOR
5'
$H_2O$
LIME SLURRY
PASTE
CAKE SEPARATOR
6'
PASTE LIQUOR
DIBASIC CRYSTALLIZER
8'
MOIST CAKE
DIBASIC SLURRY
DRYER
7'
$H_2O$
DIBASIC SEPARATOR
9'
$Ca(OCl)_2$
NaCl MOTHER LIQUOR

FIG-4

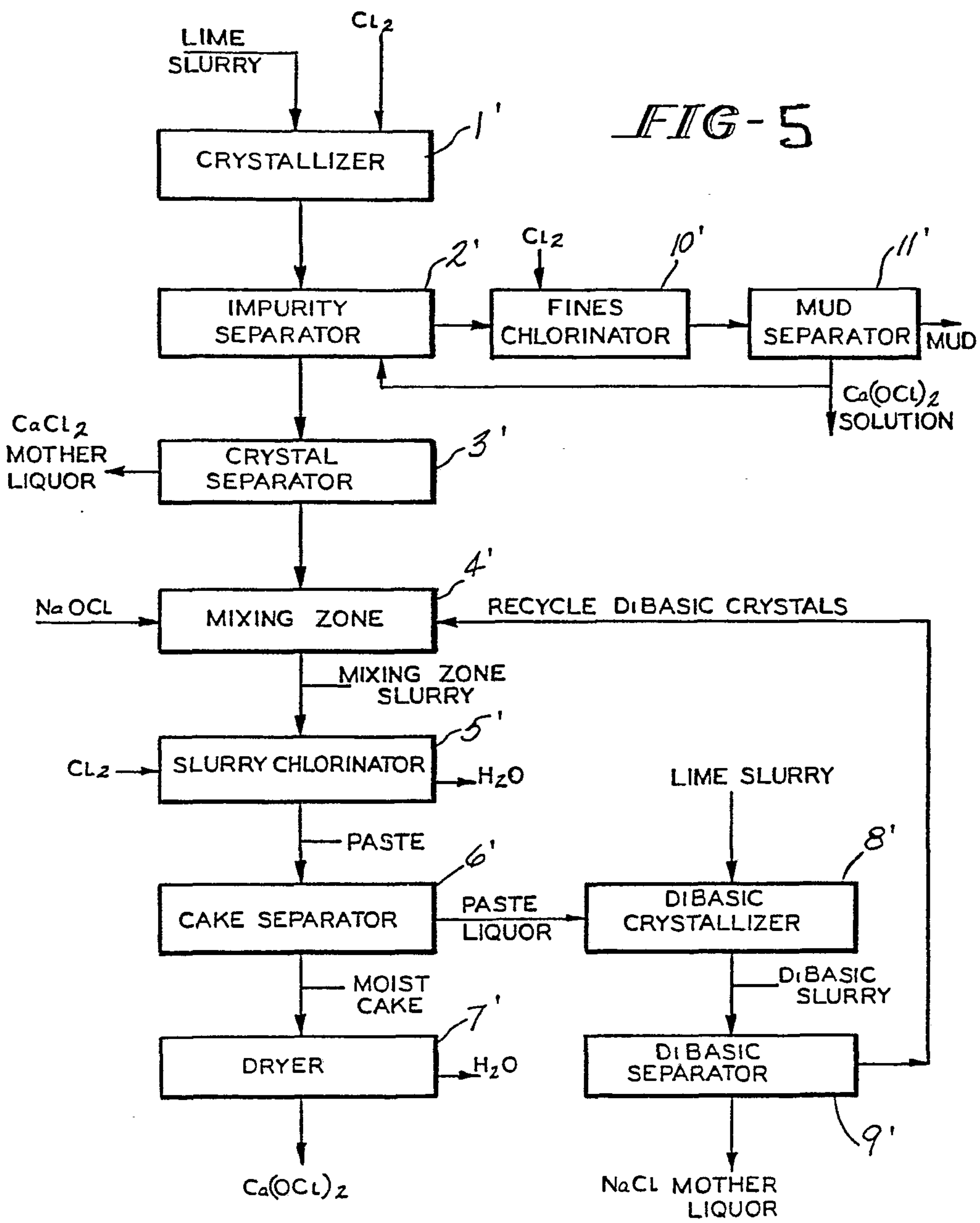
LIME SLURRY
$Cl_2$
CRYSTALLIZER
1'
FIG-5
2'
$Cl_2$
10'
11'
IMPURITY SEPARATOR
FINES CHLORINATOR
MUD SEPARATOR
MUD
$Ca(OCl)_2$ SOLUTION
$CaCl_2$ MOTHER LIQUOR
CRYSTAL SEPARATOR
3'
4'
NaOCl
MIXING ZONE
RECYCLE DIBASIC CRYSTALS
MIXING ZONE SLURRY
5'
$Cl_2$
SLURRY CHLORINATOR
$H_2O$
LIME SLURRY
PASTE
6'
8'
CAKE SEPARATOR
PASTE LIQUOR
DIBASIC CRYSTALLIZER
MOIST CAKE
DIBASIC SLURRY
7'
DRYER
$H_2O$
DIBASIC SEPARATOR
9'
$Ca(OCl)_2$
NaCl MOTHER LIQUOR